# EUROPEAN PATENT APPLICATION

(11) **EP 4 306 986 A1**
(43) Date of publication of application: **17.01.2024**
(21) Application number: 23184739.3
(22) Date of filing: 11.07.2023
(51) Int. Cl.: G01S 5/16

(54) **SYSTEMS AND METHODS FOR DETERMINING SENSOR LOCATION AND ORIENTATION**

(30) Priority: 14.07.2022 US 202263389291 P
(71) Applicant: The Raymond Corporation, Greene, New York 13778 (US)
(72) Inventor: GONCALVES, Fernando D., Vestal, New York 13850 (US); WEISS, Joseph A., Greene, New York 13778 (US)
(74) Representative: Zacco Sweden AB

(57) **Abstract**

Sensor location and orientation systems and methods assist MHV manufacturers and operators in determining the precise location and orientation of MHV sensors by using a location tracking system.

## Description

### CROSS-REFERENCES TO RELATED APPLICATIONS

This application claims the benefit of U.S. Provisional Patent Application No. 63/389,291, filed July 14, 2022, which is incorporated herein by reference.

### BACKGROUND

Certain material handling vehicles (MHVs), for example automated MHVs, may be equipped with a variety of sensors. These sensors may be used for, among other purposes, determining the location (e.g., position) and orientation of a MHV within a given environment and/or the location (e.g., position) and orientation of objects relative to the MHV. Sensors installed on such vehicles are often configured to report a result relative to their own frame of reference. A computer coupled with the sensors may determine the location and orientation of the MHV or objects relative to the MHV based on the output of the various sensors. The computer needs to know with a high degree of accuracy how each sensor is located and oriented with respect to the MHV to properly interpret the result reported by each sensor, and to determine an accurate location and orientation of the MHV or objects relative to the MHV. Therefore, it is important that the location and orientation of each sensor about the MHV is known, and furthermore is accurate.

If no measurement of the sensor location and orientation is performed, then such information may be taken from the construction drawings and is assumed to be the actual location and orientation. However, any manufacturing tolerance, bumps out of calibration, or vehicle or sensor wear will result in some inaccuracy in how the vehicle senses the external environment and determines its actual location and orientation. Sensor location and orientation may be measured using conventional tools such as a tape measure, protractor, and the like. However, conventional tools may not have the precision or accuracy required to locate sensors with sufficient specificity. Further, this method is time consuming and not accurately repeatable. A calibrated target may be used for sensors to calibrate themselves. The calibrated target may be set in a known location and orientation, and the sensor may deduce its own location based on where the target appears in its field of view. However, this may require a precision-manufactured calibration target and take a nontrivial amount of time to locate the target precisely in the correct location and orientation. Any error in the positioning of the calibration target will result in the sensors determining incorrect information about their locations.

### BRIEF SUMMARY

The present disclosure describes novel sensor location and orientation systems and methods for assisting MHV manufacturers and operators in determining the precise location and orientation of MHV sensors by using a location tracking system.

In some embodiments, a sensor location and orientation system for a material handling vehicle having a sensor may comprise a sensor mount configured to couple with the material handling vehicle sensor, a sensor tracking device coupled with the sensor mount, and an origin tracking device.

In some embodiments, the sensor location system may further comprise a base station.

In some embodiments, the sensor tracking device and origin tracking device each comprise a plurality of electromagnetic radiation sensors configured to receive electromagnetic radiation.

In some embodiments, the base station is configured to transmit electromagnetic radiation.

In some embodiments, each of the sensor tracking device and origin tracking device are configured to transmit information relating to the received electromagnetic radiation.

In some embodiments, the sensor location system may further comprise a computer, wherein the computer is configured to receive information relating to the received electromagnetic radiation, and determine, from the received information, the location and orientation of the sensor tracking device.

In some embodiments, the computer is further configured to determine the location and orientation of the material handling vehicle sensor based on the location and orientation of the sensor tracking device.

In some cases, the system further includes an adaptor configured to position the origin tracking device at a known location relative to the material handling vehicle.

In some embodiments, a method for determining a location of a material handling vehicle sensor may comprise coupling a sensor mount with the material handling vehicle sensor, coupling a sensor tracking device with the sensor mount, and placing an origin tracking device at a predetermined location with respect to the material handling vehicle.

In some embodiments, the method for determining a location of a material handling vehicle sensor may further comprise placing a base station about the material handling vehicle.

In some embodiments, the method for determining a location of a material handling vehicle sensor may further comprise causing the base station to transmit electromagnetic radiation.

In some embodiments, the sensor tracking device and origin tracking device each comprise a plurality of electromagnetic radiation sensors configured to receive electromagnetic radiation, and the method for determining a location of a material handling vehicle sensor may further comprise causing the sensor tracking device and origin tracking device to transmit information relating to the received electromagnetic radiation.

In some embodiments, the method for determining a location of a material handling vehicle sensor may further comprise receiving, by a computer, the information relating to the received electromagnetic radiation, and determining, by the computer, the location and orientation of the sensor tracking device based on the received information.

In some embodiments, the method for determining a location of a material handling vehicle sensor may further comprise determining, by the computer, the location and orientation of the material handling vehicle sensor based on the location and orientation of the sensor tracking device.

In another aspect, a sensor location and orientation system for a material handling vehicle comprises a material handling vehicle sensor, a tracking element coupled with the material handling vehicle sensor, and an origin tracking device.

In some embodiments, the material handling vehicle sensor senses an environment surrounding the material handling vehicle and the tracking element is integrated with a housing of the material handling vehicle sensor.

In some cases, the tracking element and the origin tracking device each comprise at least one electromagnetic radiation sensor configured to receive electromagnetic radiation.

In various instances, each of the material handling vehicle sensor and the origin tracking device are configured to transmit information relating to the received electromagnetic radiation. A computer receives the information related to the transmitted electromagnetic radiation from the sensor and extrapolates a location and an orientation of the sensor based on based on the electromagnetic radiation.

In some embodiments, at least one of the tracking element or the origin tracking device comprise a visual identifier.

In various cases, the system further includes a camera configured to transmit information related to the visual identifier. A computer receives the information related to the visual identifier from the camera and extrapolates a location and an orientation of the visual identifier based on a comparison of a perspective of the visual identifier to a known size and a known pattern of the visual identifier.

The foregoing and other aspects and advantages of the disclosure will appear from the following description. In the description, reference is made to the accompanying drawings which form a part hereof, and in which there is shown by way of illustration a preferred configuration of the disclosure. Such configuration does not necessarily represent the full scope of the disclosure, however, and reference is made therefore to the claims and herein for interpreting the scope of the disclosure.

### BRIEF DESCRIPTION OF DRAWINGS

The invention will be better understood and features, aspects and advantages other than those set forth above will become apparent when consideration is given to the following detailed description thereof. Such detailed description makes reference to the following drawings.
Fig. 1A is a perspective view of a mount, according to aspects of the present disclosure.
Fig. 1B is a perspective view of a sensor, according to aspects of the present disclosure.
Fig. 2 is a rotated perspective view of a mount, according to aspects of the present disclosure.
Fig. 3 is a perspective view of a tracking device, according to aspects of the present disclosure.
Fig. 4 is a perspective view of a tracker-mount assembly, according to aspects of the present disclosure.
Fig. 5 is a perspective view of a tracker-sensor assembly, according to aspects of the present disclosure.
Fig. 6 is a perspective view of tracking devices arranged about forklift forks, according to aspects of the present disclosure.
Fig. 7 is a perspective view of a first exemplary tracker location system arranged about forklift forks, according to aspects of the present disclosure.
Fig. 8 is a perspective view of a second exemplary tracker location system arranged about forklift forks, according to aspects of the present disclosure.
Fig. 9A is a perspective view of a sensor comprising a first exemplary tracking device, according to aspects of the present disclosure.
Fig. 9B is a perspective view of a sensor comprising a second exemplary tracking device, according to aspects of the present disclosure.

### DETAILED DESCRIPTION

Before any aspects of the invention are explained in detail, it is to be understood that the invention is not limited in its application to the details of construction and the arrangement of components set forth in the following description or illustrated in the following drawings. The invention is capable of other aspects and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

The following discussion is presented to enable a person skilled in the art to make and use embodiments of the invention. Various modifications to the illustrated embodiments will be readily apparent to those skilled in the art, and the generic principles herein can be applied to other embodiments and applications without departing from embodiments of the invention. Thus, embodiments of the invention are not intended to be limited to embodiments shown but are to be accorded the widest scope consistent with the principles and features disclosed herein. The following detailed description is to be read with reference to the figures, in which like elements in different figures have like reference numerals. The figures, which are not necessarily to scale, depict selected embodiments and are not intended to limit the scope of embodiments of the invention. Skilled artisans will recognize the examples provided herein have many useful alternatives and fall within the scope of embodiments of the invention.

It is also to be appreciated that material handling vehicles (MHVs) are designed in a variety of classes and configurations to perform a variety of tasks. It will be apparent to those of skill in the art that the present disclosure is not limited to any specific MHV, and can also be provided with various other types of MHV classes and configurations, including for example, lift trucks, forklift trucks, reach trucks, SWING REACH^{®} vehicles, turret trucks, side loader trucks, counterbalanced lift trucks, pallet stacker trucks, order pickers, transtackers, and man-up trucks, and can be commonly found in warehouses, factories, shipping yards, and, generally, wherever pallets, large packages, or loads of goods can be required to be transported from place to place. The various systems and methods disclosed herein are suitable for any of operator controlled, pedestrian controlled, remotely controlled, and autonomously controlled material handling vehicles. Further, the various systems and methods disclosed herein are suitable for other vehicles, such as automobiles, buses, trains, tractor-trailers, farm vehicles, factory vehicles, and the like.

Certain MHVs, for example automated MHVs, may be equipped with a variety of sensors, such as proximity sensors, cameras, radar, lidar, sonar, and the like. These sensors may be used for, among other purposes, determining the location and orientation of a MHV within a given environment, determining a location or orientation of objects relative to the MHV, or the like. Sensors installed on such vehicles are often configured to report a result relative to their own frame of reference. A computer coupled with the sensors may determine the location and orientation of the MHV based on the output of the various sensors. Therefore, it is important that the location and orientation of each sensor about the MHV is known, and furthermore is accurate.

An automated MHV (e.g., a computer of the automated MHV) needs to know with a high degree of accuracy how each sensor is located and oriented with respect to the MHV to properly interpret the result reported by each sensor. For example, if a sensor reports an object two meters directly in front of it, but the sensor is mounted such that the sensor faces 90 degrees to the right of the forward direction of the MHV, the MHV needs to know from where the object was sensed to be able to know where it is with respect to the body (or other physical extremity) of the MVH. The same is applicable for manually driven MHV's with operator assist systems installed thereupon.

A design for sensor placement about an MHV may have exact locations and orientations predetermined. However, when sensors are physically placed about an MHV according to the design, for example during manufacturing, there are variances and tolerances in the exact location and orientation of the sensors, both as compared to the design and as compared to other MHVs of the same design. In addition, when sensors are placed within a housing or otherwise packaged prior to installation on the MHV, there may be variances and tolerances in the exact location and orientation of the sensor within the housing. Further, as an MHV is used, sensor(s) and/or sensor housing(s) may be bumped and/or components may wear, which can further cause deviation from design specifications.

Systems and methods according to various embodiments of the present technology may comprise 3-D location trackers coupled with MHV sensors to determine precise location or position and orientation information relating to the sensors. As referred to herein, location or position refers to how an object or sensor is placed in space (e.g., a location or position in an x, y, z plane) while orientation refers to how an object is arranged in space (e.g., a roll, pitch, and yaw of an object). Together, determining a location or position and orientation of an object results in determining the six degrees of freedom (x, y, z, roll, pitch, and yaw) of the object.

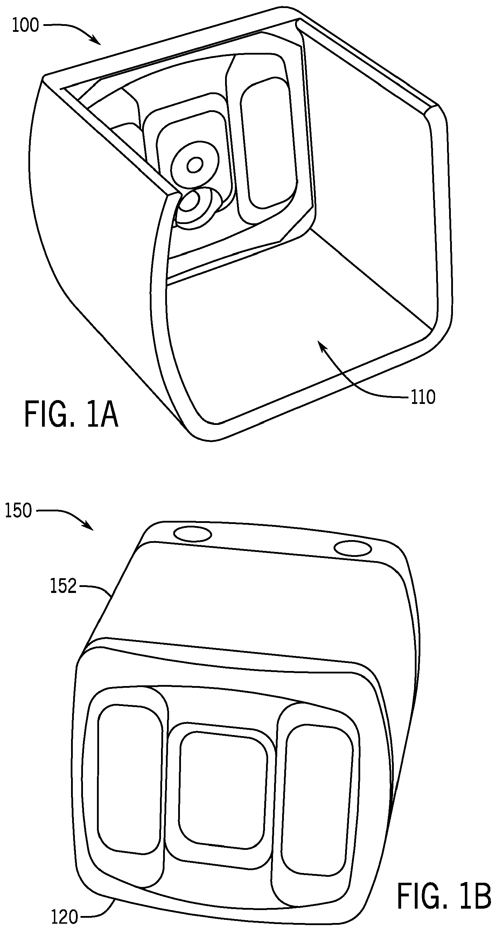

Referring to Fig. 1B, a MHV sensor 150 may comprise a housing 152 having a first surface 120. In some embodiments, the first surface 120 comprises a sensing surface. The sensing surface of the sensor housing 152 may comprise the surface through which the environment is sensed by the sensor. In some cases, the sensor can be an IFM sensor from IFM EFECTOR, INC.

Fig. 1A depicts a mount 100, comprising a cavity 110 configured to snugly fit (e.g., with little or no play) the sensor housing 152. In some embodiments, the mount 100 may be configured to be friction fit with the sensor housing 152. In some embodiments, the mount 100 may be configured to secure to the sensor housing 152 using a clip mechanism. In some embodiments, the mount 100 may be configured to fasten to the sensor housing 152, for example using a screw, clamp, hook-and-loop strap, or the like.

The mount 100 may be manufactured using any suitable method and from any suitable material. For example, the mount 100 may be 3-D printed from plastic or metal. In some embodiments, the dimensions of the mount 100 may be known within a predefined tolerance.

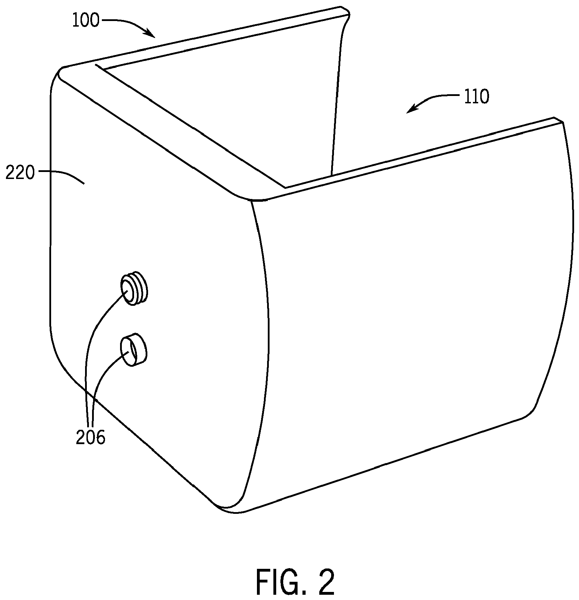

Referring to Fig. 2, the mount 100 may comprise a first surface 220. In some embodiments, the first surface 220 may be a reference surface, having a predefined distance and orientation from a predefined surface of the sensor housing 152. In some embodiments, the first surface 220 may be parallel with and a set distance from the first surface 120 or the sensing surface of the sensor housing 152. In some embodiments, the mount 100 may comprise one or more attachment mechanisms 206 configured to fix the location and orientation of a tracking device with respect to the first surface 220. In some embodiments, the attachment mechanism 206 may comprise a threaded fastener, a post, a twist-lock mechanism, or the like. In an exemplary embodiment, the attachment mechanism 206 comprises a threaded fastener in combination with a post.

The tracking device may comprise an active or passive device that operates as part of a tracker location system (described in more detail below). The tracker location system may comprise a system and/or method for determining the actual or relative location and/or orientation (for example, in six degrees of freedom (x, y, z, roll, pitch, and yaw)) of one or more tracking devices, for example using electromagnetic radiation ("EMR") sensing, acoustic sensing, or the like. In some embodiments, the tracker location system may determine the location and/or orientation of one or more tracking devices with sub-millimeter accuracy. In some embodiments, the tracking device may comprise reflective surfaces configured to reflect EMR (e.g., visible light, infrared ("IR") light, near-IR light, and the like) from one or more EMR sources of the tracker location system. In some embodiments, the tracking device may comprise a source of EMR (e.g., visible light, IR light, near-IR light, and the like), which may be observed by other components of the tracker location system (e.g., one or more cameras). In some embodiments, the tracking device may comprise EMR sensor(s) configured to observe EMR, for example determining information about EMR received by the EMR sensor(s). In some embodiments, the tracking device may comprise reflective surfaces configured to reflect acoustic signals (e.g., reflective of ultrasonic wavelengths). In some embodiments, the tracking device may comprise a transmitter and/or receiver of acoustic signals, for example an ultrasonic transducer.

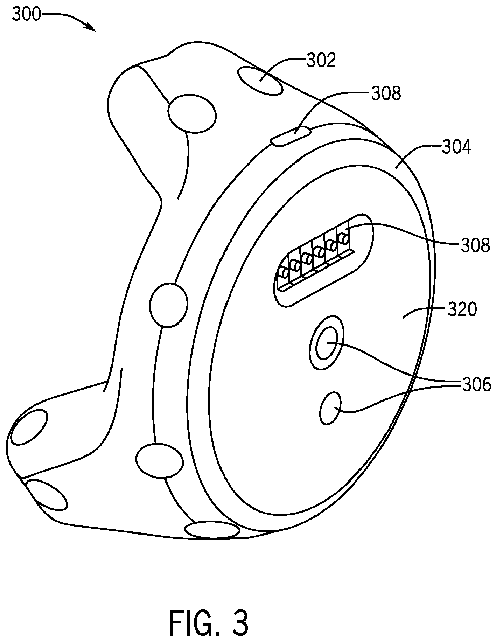

Referring to Fig. 3, in an exemplary embodiment the tracking device 300 may comprise one or more EMR sensors 302 placed about the housing 304 of the tracking device 300. In some cases, the tracking device 300 can be a VIVE^{®} tracker from HTC VIVE ENTERPRISE SERVICES. The housing 304 may comprise a mounting surface 320. In some embodiments, the housing 304 may comprise one or more attachment mechanisms 306 configured to couple with other attachment mechanisms, such as the attachment mechanisms 206 of the mount 100. In an exemplary embodiment, the attachment mechanism 306 comprises a threaded hole and a hole configured to accept a post.

In some embodiments, the tracking device 300 may comprise wired and/or wireless communication circuitry to facilitate transmission of information from the sensor(s) 302. In some embodiments, the communication circuitry may comprise a Bluetooth^{®}, WiFi^{®}, and/or other wireless transceiver. In some embodiments, the communication circuitry may comprise wired connections 308, such as USB, pogo pin connector, and/or other connector coupled with a wired transceiver.

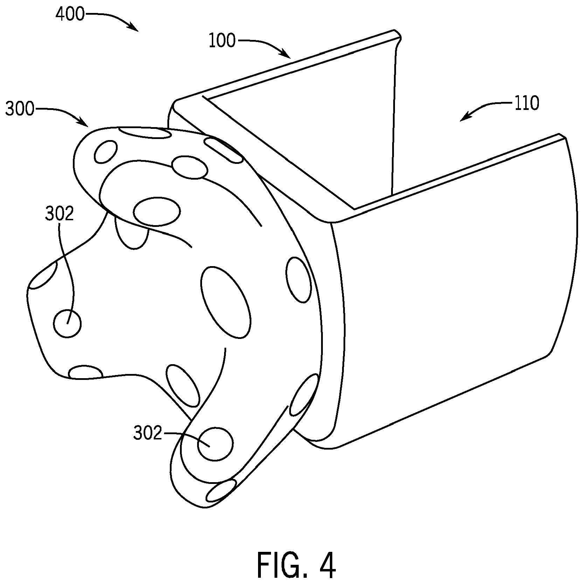

Referring to Fig. 4, the tracking device 300 may be coupled with the mount 100 using the attachment mechanisms 206, 306 to make a tracker-mount assembly 400, such that the mounting surface 320 is proximate to and at a known distance from the first surface 220 of the mount 100. In some embodiments, the mounting surface 320 may be in contact with the first surface 220 of the mount 100 at a distance of substantially zero.

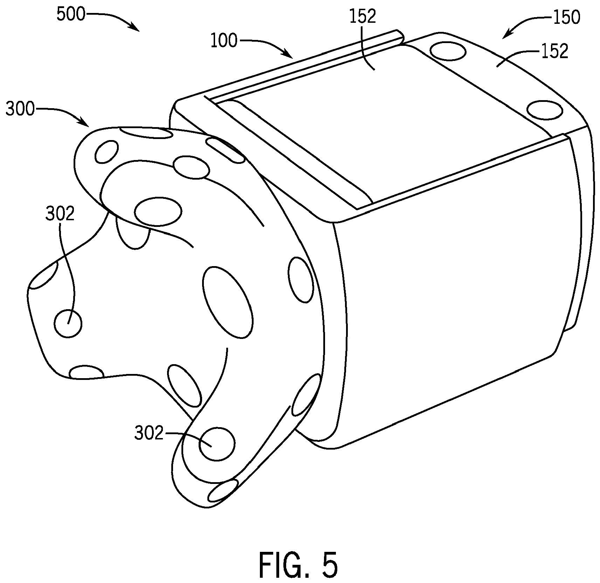

Referring to Fig. 5, the tracker-mount assembly 400 may be coupled with the sensor housing 152 to make a tracker-sensor assembly 500. The location and orientation of the sensor 150 may be determined with respect to the tracking device 300. For example, the first surface 120 or sensing surface of the sensor housing 152 may be at a known distance from the first surface 220 of the mount 100, which may be at a known distance from the mounting surface 320 of the tracking device 300. The determined location of the tracking device 300 (e.g., by the computer) may be at a known distance from the mounting surface 320 of the tracking device 300. For example, the determined location of the tracking device may be with respect to the center of mass of the tracking device 300, the physical center of the tracking device 300, the center of the mounting surface 320 of the tracking device 300, or the like. The orientation of the sensor 150 may likewise be determined with respect to the tracking device 300.

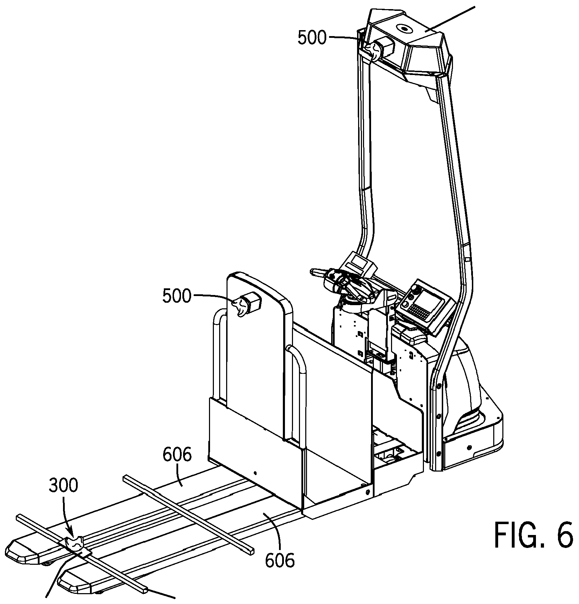

Referring to Fig. 6, sensor location and orientation systems and methods according to various embodiments may comprise a first tracking device 300 located at a predetermined location with respect to the MHV 600, and one or more tracker-sensor assemblies 500. Two tracker-sensor assemblies 500 are shown coupled to the MHV 600 at predetermined locations. The one or more tracker-sensor assemblies 500 may comprise a sensor 150 coupled with the MHV 600. The first tracking device 300 may be referred to as the origin tracking device 300 herein. In some embodiments, the origin tracking device 300 may be coupled (e.g., as previously described) with an adaptor 602 and/or a framework 604, for example half-way between the tips of the forks 606. The adaptor 602 and/or framework 604 may position the origin tracking device 300 at a known location and/or orientation with respect to the MHV 600 creating a known relationship between the origin tracking device 300 and the MHV 600 and/or an MHV coordinate system. In some embodiments, the location and/or orientation of the origin tracking device 300 may be measured with respect to the MHV 600.

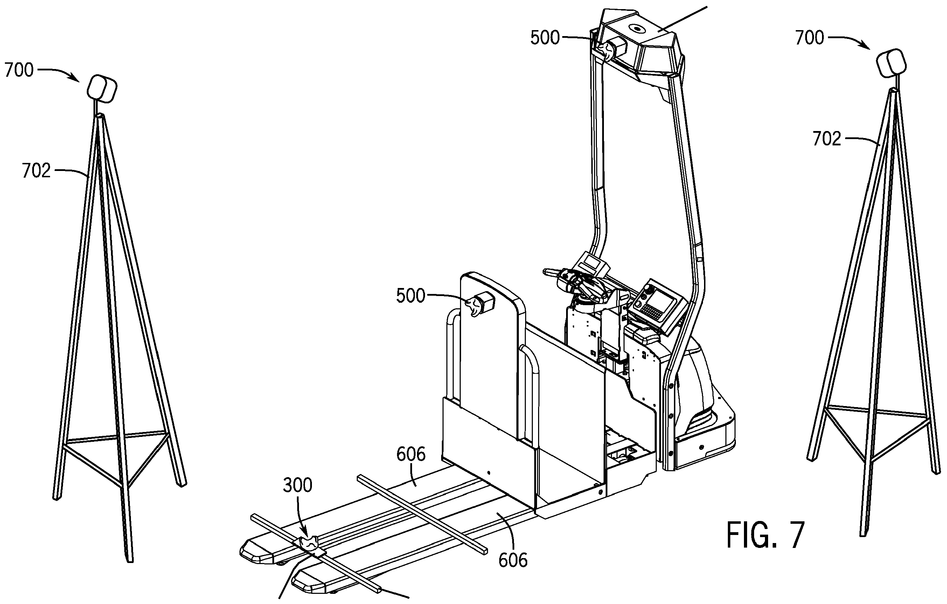

Referring to Fig. 7, sensor location and orientation systems and methods according to various embodiments may comprise a tracker location system, comprising one or more base stations 700 and one or more tracker-sensor assemblies 500. In some embodiments, the tracker location system may further comprise an origin tracking device 300. The origin tracking device 300 may provide a reference point, for example the origin location and orientation of an arbitrary coordinate system, from which the location and/or orientation of the one or more tracker-sensor assemblies 500 may be determined. In some cases, the one or more base stations 700 can be one or more VIVE^{®} base stations from HTC VIVE ENTERPRISE SERVICES.

In some embodiments, a base station 700 may emit EMR (e.g., IR), for example combinations of omnidirectional pulses, synchronization flashes, vertical sweeps, horizontal sweeps, and the like. One or more base stations 700 may use the EMR to synchronize operation (e.g., to coordinate the emission of EMR or EMR sequences). The one or more base stations 700 might be synchronized using a cable communicatively coupling the one or more base stations 700. Alternatively, the one or more base stations 700 might be synchronized optically when the one or more base stations 700 are in each other's line of sight. The one or more tracking devices 300, including the origin tracking device 300 and tracking devices 300 of the one or more tracker-sensor assemblies 500, may receive the various EMR sequences using the one or more sensors 302. The one or more base stations 700 may be placed about the MVH 600 such that the origin tracking device 300 and one or more tracker-sensor assemblies 500 receive EMR from one or more base stations 700. In some embodiments, each of the one or more base stations 700 may be mounted, for example on a tripod 702, and located about the MVH 600 such that the field-of-view of each base station 700 includes the origin tracking device 300 and at least one tracker-sensor assembly 500. In some embodiments, the various tracking devices 300 may provide more accurate and/or reliable results if in view of at least two base stations 700.

In some embodiments, because of the varying location of the tracking device 300 sensors 302 with respect to the EMR source of the base station(s) 700, the EMR arrives at slightly different times at each sensor 302. The tracking device(s) 300 may be configured to determine timing and/or other relevant information from the received EMR at the sensors 302. In some embodiments, the timing and/or other determined information, such as angle with respect to the base station 700, may be communicated to a computer via the communication circuitry. In some embodiments, the computer may comprise an internal or external (e.g., USB) wireless transceiver, and the tracking device(s) 300 may communicate the information wirelessly to the computer.

The computer may determine the relative and/or absolute location and orientation of the tracking device(s) 300 using the received sensor output. In some embodiments, the computer may determine the x, y, and z location, and the roll, pitch, and yaw, of the one or more tracking devices 300 of the tracker-sensor assemblies 500, with respect to the origin tracking device 300. In some embodiments, the computer may then further determine the x, y, and z location, and the roll, pitch and yaw of the MHV sensors 150 based on the determined location and orientation of the one or more tracking devices 300 of the tracker-sensor assemblies 500 as described above. Based on the determined x, y, and z location, and the roll, pitch and yaw of the MHV sensors 150 relative to the origin tracking device 300, the computer might further determine the x, y, and z location, and the roll, pitch and yaw of the MHV sensors 150 on the MHV based on the relationship between the origin tracking device and the MHV 600 and/or the MHV coordinate system.

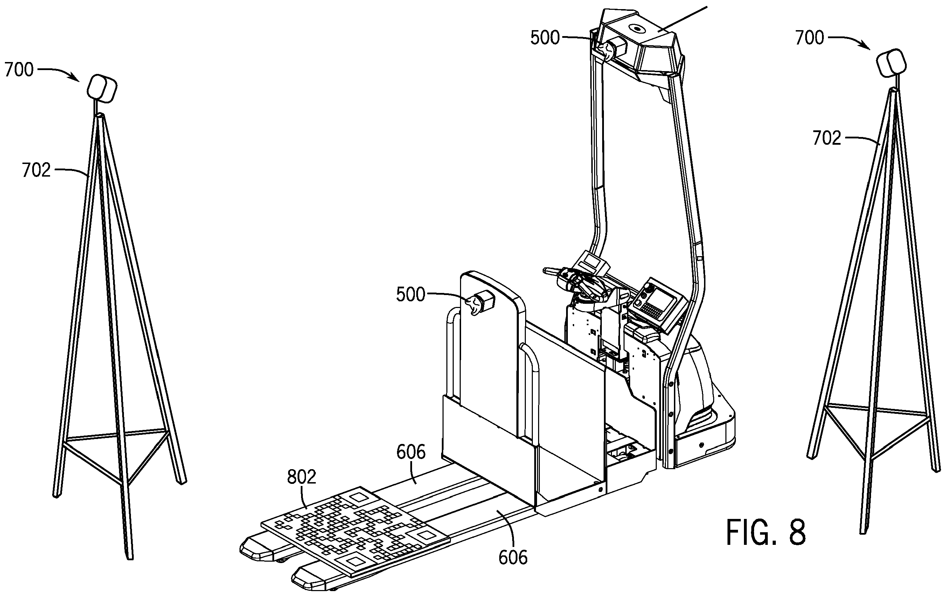

Referring to Fig. 8, sensor location and orientation systems and methods according to various embodiments may comprise a tracker location system comprising one or more cameras 800 (e.g., IR camera, near-IR camera, or the like) and one or more tracker-sensor assemblies 500. In some embodiments, the tracker location system may further comprise an origin tracking device 802. The origin tracking device 802 may be placed at a known location and/or orientation with respect to the MHV 600, for example centered between the tips of the forks 606 and having an edge aligned with the tips of the forks 606. The origin tracking device 802 may provide a reference point, for example a visual indication of the origin location and orientation of an arbitrary coordinate system, from which the location and/or orientation of the one or more tracker-sensor assemblies 500 may be determined. In some embodiments, the visual indication may comprise distinguishable lines corresponding to coordinate axes, QR code, bar code, 2D bar code, AprilTag, or other identifiable pattern, fiducial, or the like. The camera(s) 800 may observe the origin tracking device 802 and a computer (located within the camera 800 or separate from the camera 800) may extrapolate its location and orientation based on a comparison of the observed perspective of the origin tracking device 802 to the known size and pattern of the origin tracking device 802.

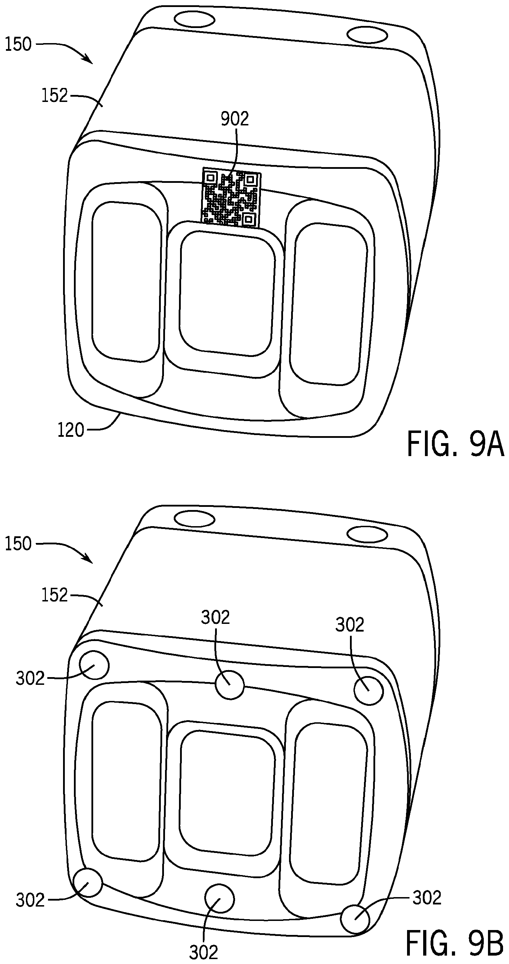

Referring to Fig. 9A, in some embodiments, sensor location and orientation systems and methods according to various embodiments may comprise a sensor 150 comprising a tracking device. In some exemplary embodiments, the sensor 150 or mount 100 may comprise a visual identifier 902, for example located directly on the sensor 150, configured to be observed by a camera, such as camera 800. The visual identifier 902 may provide a reference, for example a visual indication of the origin and orientation of visual identifier 902, from which the location and/or orientation of the sensor 150 may be determined. In some embodiments, the visual identifier 902 may comprise distinguishable lines corresponding to coordinate axes, QR code, bar code, 2D bar code, AprilTag, or other identifiable pattern, or the like. In some embodiments, the camera(s) 800 may observe the visual identifier 902 and a computer (located within the camera 800 or separate from the camera 800) may extrapolate its location and orientation based on a comparison of the observed perspective of the visual identifier 902 to the known size and pattern of the visual identifier 902. Based on the determined location and orientation of the visual identifier 902, the computer might further determine the x, y, and z location, and the roll, pitch and yaw of the MHV sensors 150 on the MHV.

Referring to Fig. 9B, in some embodiments, the sensor 150 may comprise one or more EMR sensors 302 placed about the sensor 150, for example attached to the sensor housing 152, integrated with the sensor housing 152, or the like. The sensor 150 may be configured to transmit information relating to the received electromagnetic radiation. Location and orientation of the sensor 150 may be determined as described above.

Advantageously, in some embodiments, the tracker location system may comprise commercial off-the-shelf (COTS) tracking sensors and base stations, such as used for a virtual reality ("VR") tracking system. The mounts 100 may be configured to couple with the COTS tracking sensors. The ability to use a COTS system reduces the time and cost of measuring the precise location and orientation of sensors on a MHV with respect to an arbitrary coordinate system. Sensor location and orientation systems and methods according to various embodiments may facilitate quicker determination of sensor 150 location and orientation and may be repeated more easily whenever desired (e.g., on a regular basis, after an incident involving the MHV, etc.).

While various spatial and directional terms, such as top, bottom, lower, mid, lateral, horizontal, vertical, front, and the like may be used to describe examples of the present disclosure, it is understood that such terms are merely used with respect to the orientations shown in the drawings. The orientations may be inverted, rotated, or otherwise changed, such that an upper portion is a lower portion, and vice versa, horizontal becomes vertical, and the like.

Within this specification, embodiments have been described in a way which enables a clear and concise specification to be written, but it is intended and will be appreciated that embodiments may be variously combined or separated without parting from the invention. For example, it will be appreciated that all preferred features described herein are applicable to all aspects of the invention described herein.

Thus, while the invention has been described in connection with particular embodiments and examples, the invention is not necessarily so limited, and that numerous other embodiments, examples, uses, modifications and departures from the embodiments, examples and uses are intended to be encompassed by the claims attached hereto. The entire disclosure of each patent and publication cited herein is incorporated by reference, as if each such patent or publication were individually incorporated by reference herein.

Various features and advantages of the invention are set forth in the following claims.

## Claims

1. A sensor location and orientation system for a material handling vehicle having a material handling vehicle sensor, comprising:
a sensor mount configured to couple with the material handling vehicle sensor;
a sensor tracking device coupled with the sensor mount; and
an origin tracking device.

2. The sensor location and orientation system of claim 1, further comprising a base station.

3. The sensor location and orientation system of claim 2, wherein the sensor tracking device and the origin tracking device each comprise a plurality of electromagnetic radiation sensors configured to receive electromagnetic radiation.

4. The sensor location and orientation system of claim 2, wherein the base station is configured to transmit electromagnetic radiation.

5. The sensor location and orientation system of claim 3, wherein each of the sensor tracking device and the origin tracking device are configured to transmit information relating to the received electromagnetic radiation.

6. The sensor location and orientation system of claim 5, further comprising a computer, and wherein:
the computer is configured to:
receive information relating to the received electromagnetic radiation; and
determine, from the received information, a location and an orientation of the sensor tracking device.

7. The sensor location and orientation system of claim 6, wherein the computer is further configured to determine a location and an orientation of the material handling vehicle sensor based on the location and the orientation of the sensor tracking device.

8. The sensor location and orientation system of claim 1, further comprising an adaptor configured to position the origin tracking device at a known location relative to the material handling vehicle.

9. A method for determining a location and an orientation of a material handling vehicle sensor, comprising:
coupling a sensor mount with the material handling vehicle sensor;
coupling a sensor tracking device with the sensor mount; and
placing an origin tracking device at a predetermined location with respect to a material handling vehicle.

10. The method of claim 9, further comprising placing a base station about the material handling vehicle.

11. The method of claim 10, further comprising causing the base station to transmit electromagnetic radiation.

12. The method of claim 11, wherein the sensor tracking device and origin tracking device each comprise a plurality of electromagnetic radiation sensors configured to receive electromagnetic radiation, the method further comprising causing the sensor tracking device and origin tracking device to transmit information relating to the received electromagnetic radiation.

13. The method of claim 12, further comprising:
receiving, by a computer, the information relating to the received electromagnetic radiation; and
determining, by the computer, a location and an orientation of the sensor tracking device based on the received information.

14. The method of claim 13, further comprising:
determining, by the computer, the location and the orientation of the material handling vehicle sensor based on the location and the orientation of the sensor tracking device.

15. A sensor location and orientation system for a material handling vehicle comprising:
a material handling vehicle sensor;
a tracking element coupled with the material handling vehicle sensor; and
an origin tracking device.
